# EUROPEAN PATENT APPLICATION

(11) **EP 2 096 443 A2**
(43) Date of publication of application: **02.09.2009**
(21) Application number: 09150919.0
(22) Date of filing: 20.01.2009
(51) Int. Cl.: G01N 35/00

(54) **Sample analysis apparatus, sample analysis method, and computer program product**

(30) Priority: 28.02.2008 JP 2008049014
(71) Applicant: Sysmex Corporation, Kobe-shi, Hyogo 651-0073 (JP)
(72) Inventor: Kondou, Keitarou, Hyogo 651-0073 (JP); Matsuura, Hiroyuki, Hyogo 651-0073 (JP)
(74) Representative: HOFFMANN EITLE

(57) **Abstract**

A sample analysis apparatus for analyzing a measurement sample prepared by mixing a sample and a reagent includes a condition memory for storing information regarding a plurality of read conditions; an ID acquirer for reading out identification information at a predetermined position in accordance with a predetermined read condition, the identification information being assigned for identification of at least one of a sample container, a reagent container, and a holding section for holding the sample container or the reagent container; an ID acquisition checker for determining whether or not the ID acquirer has successfully read out the identification information; and a read condition changer for changing the predetermined read condition to a different read condition different from the predetermined read condition stored in the condition memory when the ID acquisition checker has determined that the readout operation was not successful.

## Description

### FIELD OF THE INVENTION

The present invention relates to a sample analysis apparatus, a sample analysis method, and a computer program product capable of analyzing a measurement sample prepared by mixing a sample and a reagent.

### BACKGROUND

In a sample analysis apparatus capable of analyzing a measurement sample prepared by mixing a sample and a reagent, the sample and the reagent are contained in a specific test tube or a container. The test tube or the container has attached thereto a barcode label containing identification information for identifying the sample, the reagent, or the like.

However, the types of the sample, the reagent, and the like are tremendous, and the types of a test tube, a container, and the like supplied by a manufacturer are often mixed. Therefore, there may be a case where it is difficult to successfully read out the identification information due to reasons such as absence of a barcode label or a difference in attachment position of the barcode label.

In order to cope with such an unsuccessful readout of the barcode label, Japanese Patent Application Publication No. H6-130069 discloses an automated analysis apparatus in which when a readout operation was not successful, the presence of a barcode label itself is checked, and the readout operation is performed again for a test tube having the barcode label attached thereto while finely adjusting the reading position of the barcode label. By changing the reading position when the readout operation was not successful, it is likely that a second readout operation can be successfully performed for the test tube for which the first readout operation was not successful.

However, in the automated analysis apparatus disclosed Japanese Patent Application Publication No. H6-130069, although the reading position of the barcode label is finely adjusted, a read condition such as a threshold value for determining whether or not a signal detected by a magnitude of a reflected light level corresponds to bars or a scan width of the barcode reader is not changed from the first readout operation to the second readout operation. Therefore, in the automated analysis apparatus disclosed Japanese Patent Application Publication No. H6-130069, there is a problem that a possibility of successfully performing the second readout operations is low, except a special case where the barcodes are partially vague.

### SUMMARY OF THE INVENTION

The scope of the present invention is defined solely by the appended claims, and is not affected to any degree by the statements within this summary.

A first aspect of the present invention is a sample analysis apparatus for analyzing a measurement sample prepared by mixing a sample and a reagent comprising: a condition memory for storing information regarding a plurality of read conditions; an ID acquirer for reading out identification information at a predetermined position in accordance with a predetermined read condition, the identification information being assigned for identification of at least one of a sample container, a reagent container, and a holding section for holding the sample container or the reagent container; an ID acquisition checker for determining whether or not the ID acquirer has successfully read out the identification information; and a read condition changer for changing the predetermined read condition to a different read condition different from the predetermined read condition stored in the condition memory when the ID acquisition checker has determined that the readout operation was not successful.

A second aspect of the present invention is a sample analysis method for analyzing a measurement sample prepared by mixing a sample and a reagent, comprising: (a) reading out identification information assigned for identification of at least one of a sample container, a reagent container, and a holding section for holding the sample container or the reagent container at a predetermined position in accordance with a predetermined read condition; (b) determining whether or not the identification information has been successfully read out; and (c) changing the predetermined read condition to a different read condition when a determination result in the step (b) shows that the readout operation was not successful.

A third aspect of the present invention is a computer program product, comprising: a computer readable medium; and instructions, on the computer readable medium, adapted to enable a general purpose computer to perform operations, comprising: (a) reading out identification information assigned for identification of at least one of a sample container, a reagent container, and a holding section for holding the sample container or the reagent container at a predetermined position in accordance with a predetermined read condition; (b) determining whether or not the identification information has been successfully read out; and (c) changing the predetermined read condition to a different read condition when a determination result in the step (b) shows that the readout operation was not successful.

### BRIEF DESCRIPTION OF THE DRAWINGS

Fig. 1 is a block diagram illustrating a configuration of a sample analysis apparatus according to a first embodiment of the present invention.
Fig. 2 is a block diagram illustrating an overall configuration of a driving section of the sample analysis apparatus according to the first embodiment of the present invention.
Fig. 3 is a partial top plan view illustrating the general structure of the sample analysis apparatus according to the first embodiment of the present invention.
Fig. 4 is a perspective view illustrating a configuration of a first container rack.
Fig. 5 is a perspective view illustrating a configuration of a second container rack.
Fig. 6 is a perspective view illustrating the configuration of the first container rack, showing a state where one container is held in the first container rack.
Fig. 7 is a perspective view illustrating the configuration of the second container rack, showing a state where three containers are held in the second container rack.
Fig. 8 is a waveform diagram for explaining a method for reading and determination in the sample analysis apparatus according to the first embodiment of the present invention.
Fig. 9 is a flow chart showing a processing procedure by a CPU of a control section of the sample analysis apparatus according to the first embodiment of the present invention.
Fig. 10 is an example view of a screen displayed on a display device.
Fig. 11 is a waveform diagram for explaining a method for reading and determination in a sample analysis apparatus according to a second embodiment of the present invention.
Fig. 12 is a flow chart showing a processing procedure by a CPU of a control section of the sample analysis apparatus according to the second embodiment of the present invention.
Fig. 13 is a flow chart showing a processing procedure by a CPU of a control section of the sample analysis apparatus according to the second embodiment of the present invention.
Fig. 14 is a schematic view illustrating an overall internal configuration of a barcode reader of a sample analysis apparatus according to a third embodiment of the present invention.
Fig. 15 is a flow chart showing a processing procedure by a CPU of a control section of the sample analysis apparatus according to the third embodiment of the present invention.
Fig. 16 is a flow chart showing a processing procedure by a CPU of a control section of the sample analysis apparatus according to the third embodiment of the present invention.
Figs. 17A and 17B are example views for comparison of a voltage signal output from a barcode reader of a sample analysis apparatus according to a fourth embodiment of the present invention.
Fig. 18 is a flow chart showing a processing procedure by a CPU of a control section of the sample analysis apparatus according to the fourth embodiment of the present invention.
Fig. 19 is a flow chart showing a processing procedure by a CPU of a control section of the sample analysis apparatus according to the fourth embodiment of the present invention.
Fig. 20 is a flow chart showing a processing procedure by a CPU of a control section of the sample analysis apparatus according to a fifth embodiment of the present invention.
Fig. 21 is a flow chart showing a processing procedure by a CPU of a control section of the sample analysis apparatus according to the fifth embodiment of the present invention.

### DETAILED DESCRIPTION OF THE PREFERRED EMBODIMENTS

The preferred embodiments of the present invention will be described hereinafter with reference to the drawings.

A description of a sample analysis apparatus according to the embodiments of the present invention will be provided in detail with reference to the drawings, by way of an example of a case where the apparatus optically measures and analyzes, for example, the amount and activity of a specific substance found in blood related to coagulation and fibrinolysis.

### (First Embodiment)

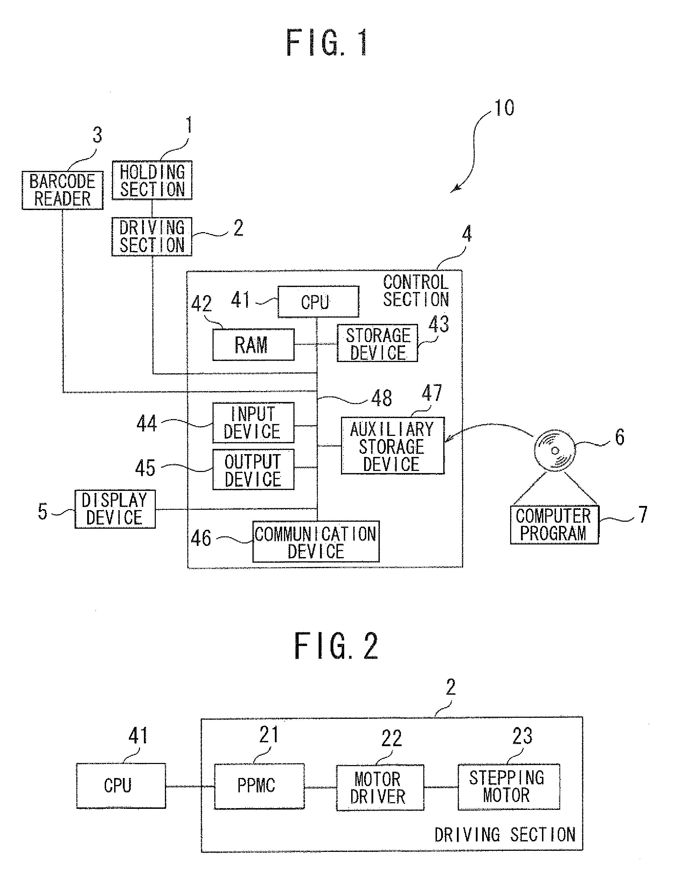

Fig. 1 is a block diagram illustrating a configuration of a sample analysis apparatus according to a first embodiment of the present invention. As illustrated in Fig. 1, a sample analysis apparatus 10 according to the first embodiment has a configuration in which a holding section 1 for holding a sample container, a reagent container, and the like is made movable by a driving section 2, and a barcode reader 3 for reading out barcode information attached to the sample container, the reagent container, and the like held in the holding section 1 is provided.

The driving section 2 moves the holding section 1 by using a stepping motor which is driven by a constant current. The operation of the driving section 2 and the operation of the barcode reader 3 are controlled by a control section 4, these sections 2, 3, and 4 being connected to each other through a signal line.

The control section 4 is configured to at least include a CPU (central processing unit) 41, a RAM 42, a storage device 43, an input device 44, an output device 45, a communication device 46, an auxiliary storage device 47, and an internal bus 48 that connects the above-described hardware configurations to each other. The CPU 41 is connected to each of the above-described hardware configurations of the control section 4 through the internal bus 48 and controls the operation of each of the above-described hardware configurations while controlling the operation of the driving section 2, the barcode reader 3, the display device 5, and the like connected thereto in accordance with a computer program 7 stored in the storage device 43.

The RAM 42 is configured by an SRAM or a flash memory, in which a load module is expanded during execution of the computer program 7, and temporary data or the like generated during execution of the computer program 7 are stored.

The storage device 43 is configured by an internally fixed type storage device (hard disk) or the like.
The computer program 7 stored in the storage device 43 is downloaded into the auxiliary storage device 47 from a portable recording medium 6 such as a DVD or a CD-ROM having recorded therein programs, data, and the like and is executed by being expanded from the storage device 43 to the RAM 42. As a matter of course, the connection portion may be downloaded from an external computer through the communication device 46.

The communication device 46 is connected to the internal bus 48 and is able to transmit and receive data to/from an external computer or the like by being connected to an external network such as the Internet, a LAN, a WAN, or the like. For example, the above-described storage device 43 is not limited to the configuration wherein it is incorporated in the control section 4, but may be an external recording medium such as an external storage connected to the control section 4 through the communication device 46.

The input device 44 is a data input medium such as a keyboard and a mouse. The display device 5 is a display device such as a CRT monitor or an LCD. The output device 45 is a printing device such as a laser printer or an ink jet printer.

Fig. 2 is a block diagram illustrating an overall configuration of the driving section 2 of the sample analysis apparatus 10 according to the first embodiment of the present invention. As illustrated in Fig. 2, upon receipt of an activation signal from the CPU 41 of the control section 4, a PPMC (pulse oscillator) 21 converts the activation signal to an instruction pulse signal and sends the instruction pulse signal to a motor driver 22. Upon receipt of the instruction pulse signal, the motor driver 22 rotates a stepping motor 23 in accordance with a pulse number of the instruction pulse signal.

For example, when the instruction pulse signal is a rotation direction control signal, a rotation direction of the stepping motor 23 is determined in accordance with a digital value, 1 or 0, representing the rotation direction. Moreover, a rotation speed of the stepping motor 23 may be changed in accordance with a frequency of the instruction pulse signal.

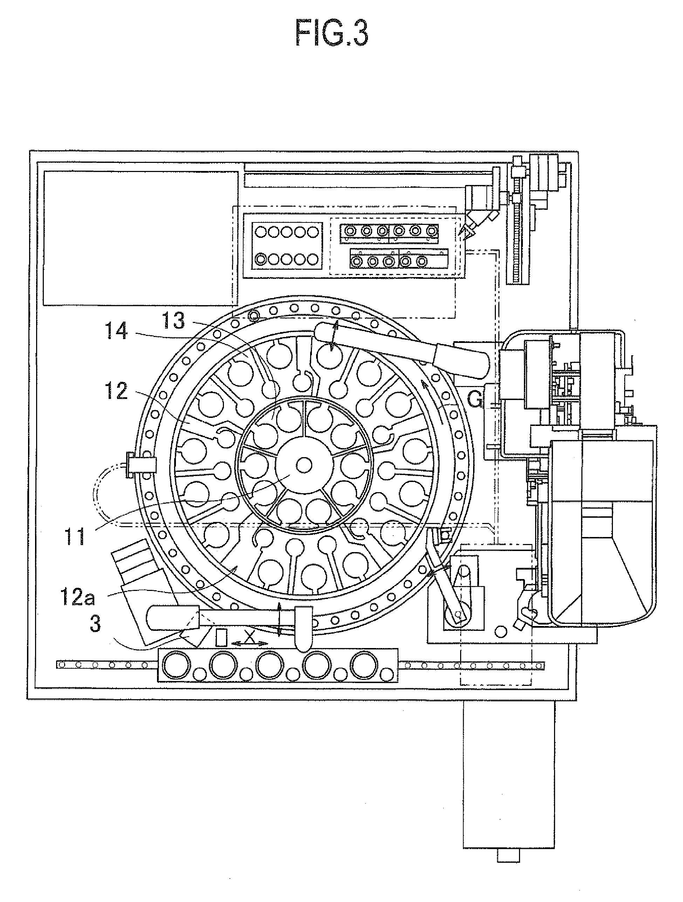

Fig. 3 is a partial top plan view illustrating the general structure of the sample analysis apparatus 10 according to the first embodiment of the present invention. In the first embodiment, the holding section 1 includes a circular first sample table 11, an annular second sample table 12, a plurality of the first container racks 13, 13, and so on, and a plurality of the second container racks 14, 14, and so on, the container racks being configured to hold therein a sample container, a reagent container, and the like. The driving section 2 includes a first stepping motor for rotating the first sample table 11 and a second stepping motor for rotating the second sample table 12. That is, the driving section 2 includes a plurality of motor drivers 22 and a plurality of stepping motors 23.

When the activation signal is sent from the CPU 41 of the control section 4, the respective stepping motors 23 are operated in accordance with the instruction pulse signal converted by the driving section 2, thereby rotating the first sample table 11 and the second sample table 12. The driving section 2 is able to rotate the first sample table 11 and the second sample table 12 in both clockwise direction and counterclockwise direction in an independent manner.

On the first sample table 11 and the second sample table 12, the plurality of first container racks 13, 13, and so on and the plurality of second container racks 14, 14, and so on capable of holding a sample container, a reagent container, and the like are arranged, respectively, to be removably mounted thereon. Barcode labels are attached to the plurality of first container racks 13, 13, and so on and the plurality of second container racks 14, 14, and so on. To read out the attached barcode labels, a barcode reader 3 is provided in the vicinity of a lateral surface of the second sample table 12 at a predetermined distance. The barcode reader 3 is connected to be able to communicate data with the control section 4, and for example, converts the read barcode information to a pulse signal and sends the pulse signal to the CPU 41.

When the second container racks 14, 14, and so on are arranged on the second sample table 12, one gap 12a of the five adjacent gaps of the second container racks 14, 14, and so on has a spacing larger than the spacing of the other four gaps. That is, through the gap 12a having the larger spacing than other gaps, the barcode reader 3 reads out the barcode information from the barcode labels attached to the first container racks 13, 13, and so on arranged on the first sample table 11 disposed on the inner side of the second sample table 12 and the barcode labels attached to the containers held in the first container racks.

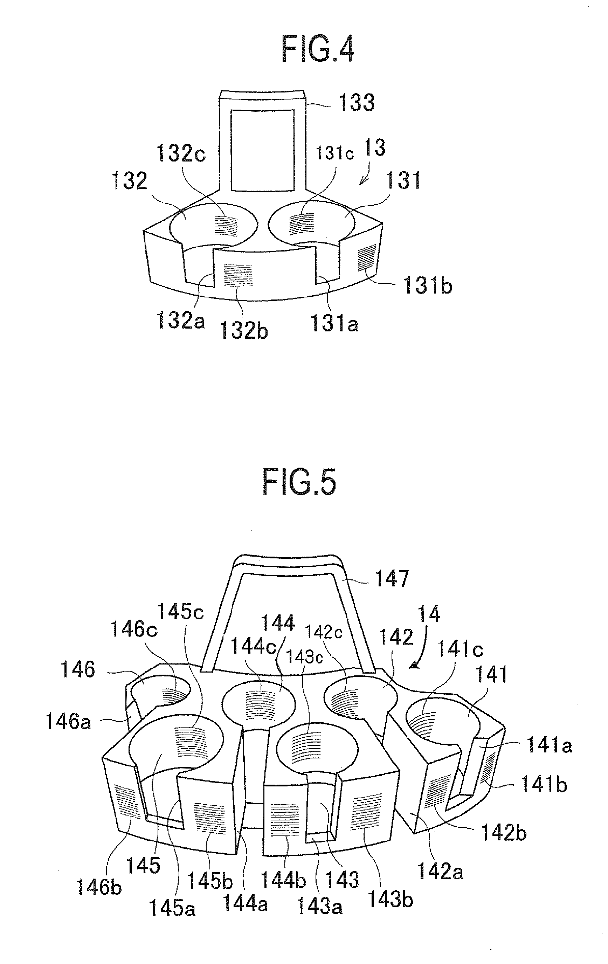

Fig. 4 is a perspective view illustrating a configuration of the first container rack 13. The first container rack 13 includes two holding parts 131 and 132 for holding a container such as a sample container or a reagent container, cut-out portions 131a and 132a provided on the front surface side of the holding parts 131 and 132, respectively, and a gripping part 133 arranged so as to project upward. The holding parts 131 and 132 have a holdable portion thereof having an approximately circular shape in plan view so that a cylindrical container can be held therein. When a container having an outer diameter smaller than the inner diameter of the holding parts 131 and 132 is held therein, a special adapter may be used to stably hold the container.

Barcode labels 131b and 132b are attached to outer circumferential surfaces of the holding parts 131 and 132, respectively. Barcode labels 131c and 132c are also attached to inner circumferential surfaces of the holding parts 131 and 132, respectively.

Fig. 5 is a perspective view illustrating a configuration of the second container rack 14. The second container rack 14 includes six holding parts 141 to 146 for holding a container such as a sample container or a reagent container, cut-out portions 141a to 146a provided on the front surface side of the holding parts 141 to 146, respectively, and a gripping part 147 arranged so as to project upward. The holding parts 141 to 146 have a holdable portion thereof having an approximately circular shape in plan view so that a cylindrical container 200 can be held therein. When a container having an outer diameter smaller than the inner diameter of the holding parts 141 to 146 is held therein, a special adapter may be used to stably hold the container.

Barcode labels 141b to 146b are attached to outer circumferential surfaces of the holding parts 141 to 146, respectively. Barcode labels 141c to 146c are also attached to inner circumferential surfaces of the holding parts 141 to 146, respectively.

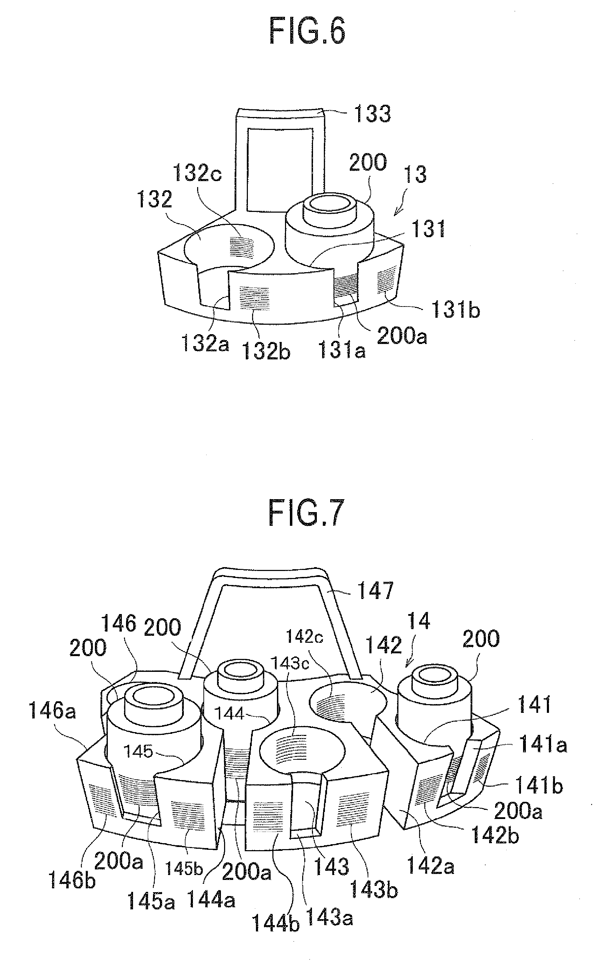

Fig. 6 is a perspective view illustrating the configuration of the first container rack 13, showing a state where one container 200 is held in the first container rack 13. In the state shown in Fig. 6, since the container 200 is held in the holding part 131, it is unable to read out the barcode label 131c attached on the inner circumferential surface of the holding part 131.

That is, when the barcode reader 3 has read out a barcode label 200a attached to the container 200 after the barcode label 131b has been read out while not reading out the barcode label 131c, the CPU 41 of the control section 4 may determine that the container 200 containing a sample or a reagent corresponding to the barcode information read out from the barcode label 200a is held.

Similarly, Fig. 7 is a perspective view illustrating the configuration of the second container rack 14, showing a state where three containers 200 are held in the second container rack 14. In the state shown in Fig. 7, since the containers 200, 200, and 200 are held in the holding parts 141, 144, 145, it is unable to read out the barcode labels 141c, 144c, and 145c attached to the inner circumferential surfaces of the holding parts 141, 144, and 145.

That is, when the barcode reader 3 has read out a barcode label 200a attached to the container 200 after the barcode label 141b, 144b, or 145b has been read out while not reading out the barcode label 141c, 144c, or 145c, the CPU 41 of the control section 4 may determine that the container 200 containing a sample or a reagent corresponding to the barcode information read out from the barcode label 200a is held.

In the first embodiment, first, with respect to the entire positions of the first container rack 13 and the second container rack 14 at which the container 200 can be held, a determination is made as to whether or not the container 200 is held and as to whether or not the barcode information has been successfully read out. That is, the first sample table 11 and the second sample table 12 are rotated one cycle in a predetermined direction and at a predetermined rotation speed, and then, the control section 4 makes a determination as to whether the barcode reader 3 has successfully read out the barcode information from the entire containers 200 held in the first container racks 13 and the second container racks 14 mounted on the first sample table 11 and the second sample table 12.

Next, the position of the container 200 for which the first readout operation was not successful is identified, and the barcode information is read out again from the container 200 held at the identified position by the barcode reader 3 in accordance with a different read condition different from that of the first readout operation. Here, the read condition is a condition regarding a readout method for reading out the barcode information and the like, a readout setting of the barcode reader 3, and the like, and is preliminarily stored in the storage device 43.

In the first embodiment, the barcode reader 3 employs a laser type barcode reader that scans a barcode label by irradiation of laser light. The barcode reader 3 receives reflected light and outputs a voltage signal corresponding to a reception light intensity as a two-valued voltage pulse signal. The determination as to whether the barcode information was successfully read out is determined based on whether or not a value of the voltage pulse signal acquired by the control section 4 from the barcode reader 3 is greater than a predetermined threshold value. Therefore, by changing the threshold value used for determination as to whether the barcode information read out from the barcode label was successfully read out from the first readout operation to the second readout operation, it is possible to change the read condition.

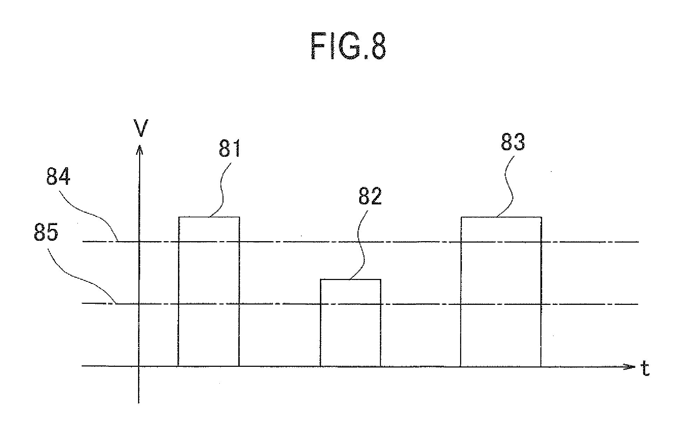

Fig. 8 is a waveform diagram for explaining a method for reading and determination in the sample analysis apparatus 10 according to the first embodiment of the present invention. In Fig. 8, the vertical axis corresponds to a magnitude (voltage value) of the voltage pulse signal, and the horizontal axis corresponds to a time.

As illustrated in Fig. 8, when the threshold value is set to the line 84, the voltage pulse signals 81 and 83 may be determined to be successfully read out because the values thereof are greater than the threshold value 84. On the other hand, the voltage pulse signal 82 may be determined to be not successfully read out because the value thereof is smaller than the threshold value 84. Therefore, by changing the threshold value to the line 85 in the second readout operation, the voltage pulse signal 82 may be determined to be successfully read out because the voltage pulse signal 82 has become greater than the threshold value 85.

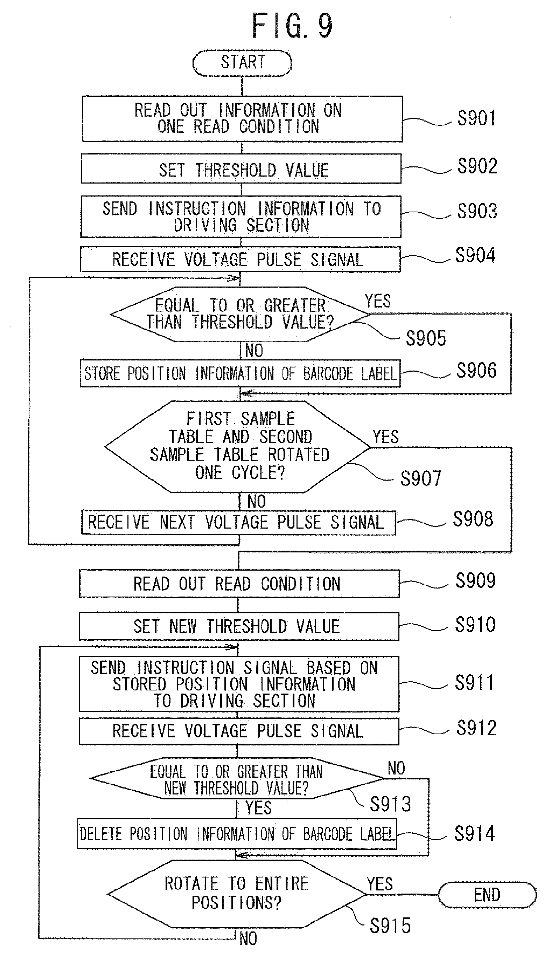

Fig. 9 is a flow chart showing a processing procedure by the CPU 41 of the control section 4 of the sample analysis apparatus 10 according to the first embodiment of the present invention. In Fig. 9, information on a plurality of read conditions is stored in the storage device 43 of the control section 4. In the first embodiment, a plurality of threshold values for determination as to whether the readout operation was successful is stored in the storage device 43.

The CPU 41 of the control section 4 reads out information on one read condition stored in the storage device 43 (step S901) and sets the read condition, i.e., a predetermined threshold value, based on the information on the read, one read condition (step S902). The CPU 41 sends instruction information giving instructions on a rotation direction and a rotation speed of the first sample table 11 and the second sample table 12 to the driving section 2 (step S903) and starts a readout operation of a barcode label. The CPU 41 receives a voltage pulse signal from the barcode reader 3 (step S904). The CPU 41 makes a determination as to whether the barcode information was successfully read out based on whether or not the value of the voltage pulse signal received from the barcode reader 3 is greater than a predetermined threshold value (step S905).

When the CPU 41 has determined that the value of the voltage pulse signal is smaller than the predetermined threshold value (step S905: NO), then the CPU 41 determines that the readout operation was not successful and stores position information of the barcode label which was not successfully read out in the storage device 43 (step S906).

Specifically, an initial position at which the rotation starts may be specified, and a driving pulse number may be counted, so that a rotation angle corresponding to the position at which the barcode label which was not successfully read out is attached can be identified. The position identification method is not limited to this. For example, a special angular sensor such as a rotary encoder may be provided, and the rotation angle may be directly stored from the initial positions of the first sample table 11 and the second sample table 12.

When the CPU 41 has determined that it is greater than the predetermined threshold value (step S905: YES), then the CPU 41 makes a determination as to whether the first sample table 11 and the second sample table 12 have rotated one cycle (step S907). When the CPU 41 has determined that neither one of the first and second sample tables 11 and 12 has rotated one cycle (step S907: NO), then the CPU 41 receives the voltage pulse signal from the barcode reader 3 having read out a next barcode label (step S908), and returns the process to step S905 to repeat the above-described processes. When the CPU 41 has determined that the first sample table 11 and the second sample table 12 have rotated one cycle (step S907: YES), then the CPU 41 reads out the read condition stored in the storage device 43 (step S909) and sets a new threshold value (step S910).

The CPU 41 sends an instruction signal to the driving section 2 to sequentially rotate the first sample table 11 and the second sample table 12 in accordance with the position information stored in the storage device 43 (step S911) and perform again the readout operation of the barcode label to receive the voltage pulse signal from the barcode reader 3 (step S912).

The CPU 41 makes a determination as to whether or not the barcode information has been successfully read out based on whether or not the voltage pulse signal received from the barcode reader 3 is greater than the new threshold value (step S913). When the CPU 41 has determined that it is greater than the new threshold value (step S913: YES), then the CPU 41 deletes the position information of the barcode label, of which the voltage pulse signal has been determined to be greater than the new threshold value, among the position information stored in the storage device 43 (step S914) and makes a determination as to whether or not the rotation has been made to the entire positions stored therein (step S915).

When the CPU 41 has determined that the rotation has been made to the entire positions (step S915: YES), then the CPU 41 terminates the process. When the CPU 41 has determined that the rotation has not yet been made to the entire positions (step S915: NO), then the CPU 41 returns the process to step S911 to send an instruction signal to the driving section 2 to move to a next stored position (step S911) and repeat the above-described processes.

When the CPU 41 has determined that it is smaller than the new threshold value (step S913: NO), then the CPU 41 skips step S914, determining again that the readout operation was not successful.

In this manner, by changing the read condition from the first readout operation to the second readout operation, it is possible to increase a possibility of determining that the second readout operation successfully reads out the barcode label which has been determined to be not successfully read out under the threshold value for the first readout operation. Moreover, by performing the second readout operation only for the barcode label which was not successfully read out by the first readout operation, it is possible to prevent an increase in an overall readout time as much as possible by not performing any unnecessary additional readout operation.

A more detailed description will be given with respect to an example shown in Fig. 6. When the barcode label 200a attached to the container 200 is unable to be read out by being damaged with dirt or covered with frost due to refrigeration, then the CPU 41, first, reads out the barcode label 131b and then reads out the barcode label 132b while not reading out the barcode label 200a or the barcode label 131c, which otherwise was to be read out subsequently. Therefore, the CPU 41 may be able to recognize, for the first time, that the readout operation was not successful by confirming that neither the barcode label 200a, which was to be read out when a container is held, nor the barcode label 131c, which was to be read out when the container is not held, was read out.

When the read condition is changed whenever the unsuccessful readout is confirmed to perform again the readout operation, it is necessary to return the rotation back to the position of the cur-out portion 131a, which may disadvantageously increase a time loss for the rotation.

To the contrary, in the first embodiment, the readout operation of the barcode label is performed for the entire positions, and then, the readout operation is performed again for only the container 200 held at the position for which the readout operation was not successful. Therefore, it is possible to decrease the time loss for the rotation and simplify the control thereof, thereby reducing the overall processing throughput as much as possible.

Moreover, in the first embodiment described above, although the readout operation of the barcode label is performed for the entire positions, and then, the readout operation is performed again for only the container 200 held at the position for which the readout operation was not successful, the read condition may be changed whenever it is determined that the barcode label is not successfully read out to perform again the readout operation. In such a case, it is possible to increase a possibility of successfully reading out the identification information, which was unable to be read out due to dirt or the like, in the second readout operation without changing the reading position. Therefore, it is possible to decrease the need for the user to manually identifying a sample and decrease a possibility of outputting wrong analysis data due to confusion in sample treatment or the like.

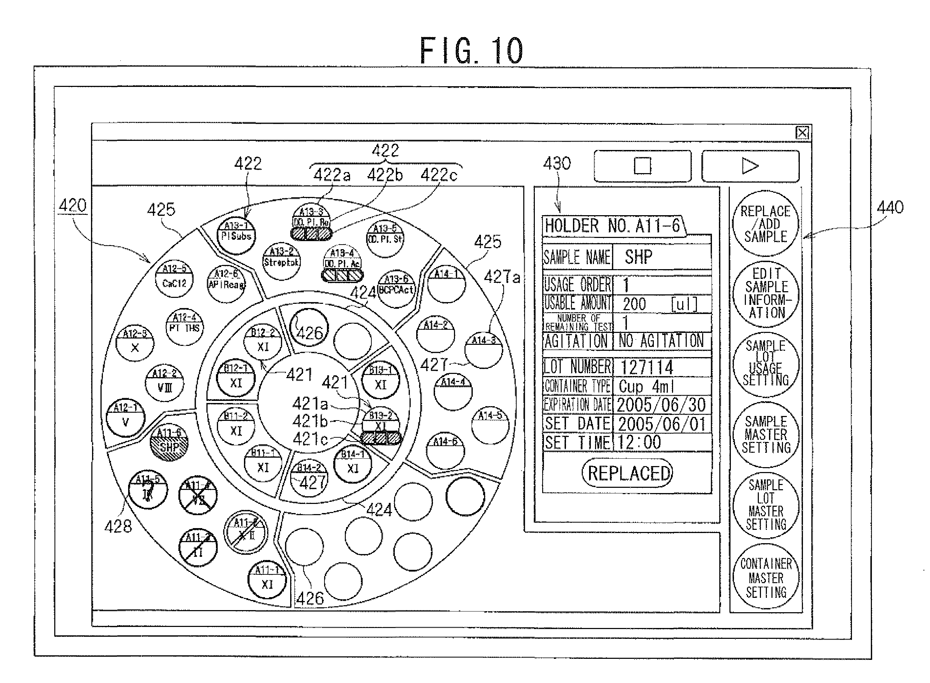

Fig. 10 is an example view of a screen displayed on the display device 5. A screen that displays the state of the sample analysis apparatus 10 includes at least an arrangement display region 420 for displaying the positions of the first container rack 13 and the second container rack 14 mounted on the first sample table 11 and the second sample table 12 and a container holdable position, a detailed information display region 430 for displaying detailed information on the content of the container held at a selected position, and an operation display region 440 for instructing an operation.

On the arrangement display region 420, a maximum of ten first sample marks 421, 421, and so on displayed in correspondence to the arrangement state of the first sample table 11 and a maximum of thirty second sample mark 422, 422, and so on displayed in correspondence to the arrangement state of the second sample table 12 are displayed. The first sample mark 421 includes a position display part 421a for displaying the position of the sample, a name display part 421b for displaying the sample name, and a remaining amount display part 421c for displaying the remaining amount of the sample. Similarly, the second sample mark 422 includes a position display part 422a for displaying the position of the sample, a name display part 422b for displaying the sample name, and a remaining amount display part 422c for displaying the remaining amount of the sample. Moreover, the remaining amount display parts 421c and 422c are displayed only when the remaining amount of the sample becomes equal to or smaller than a predetermined amount.

The position information of the sample displayed on the position display parts 421a and 422a of the first sample mark 421 and the second sample mark 422 is displayed when the barcode reader 3 reads out the barcode labels attached to the first container rack 13 and the second container rack 14. Moreover, the name of the sample displayed on the name display parts 421b and 422b is contained in the barcode information read out from the barcode label 200a attached to the container 200 containing the sample and is thus displayed by referring to a sample master stored in the storage device 43 based on the signal read out by the barcode reader 3.

The first sample mark 421 is displayed while being divided into by twos for every first rack mark 424, 424, and so on corresponding to five first container racks 13, 13, and so on capable of holding two containers 200 and 200 arranged in the first sample table 11. The second sample mark 422 is displayed while being divided into by twos for every second rack mark 425, 425, and so on corresponding to five second container racks 14, 14, and so on capable of holding six containers 200, 200, and so on arranged in the second sample table 12. Therefore, it is possible to confirm by a visual observation at which position of which container rack of which sample table, the sample is arranged.

If the container rack is not arranged on the first sample table 11 and the second sample table 12, a circular rack non-arranged mark 426 with nothing shown on the inside is displayed among the arrangement display region 420. Although the first container rack 13 and the second container rack 14 are arranged on the first sample table 11 and the second sample table 12, respectively, a sample non-arranged mark 427 is displayed at a region corresponding to the position at which the container 200 containing the sample is not arranged. The sample non-arranged mark 427 has a position display part 427a for displaying the positional information.

When the barcode label 200a attached to the container 200 is not successfully read out, a readout error mark 428 is displayed on the sample mark corresponding to the position where the container 200 for which the readout operation was not successful is held. Therefore, it is possible to confirm with a visual observation that the position where the readout error mark 428 is displayed corresponds to the position of the container 200 for which the first readout operation was not successful.

### (Second Embodiment)

The configuration of a sample analysis apparatus 10 according to a second embodiment of the present invention is the same as that of the first embodiment, and thus, the same components will be denoted by the same reference numerals and a detailed description thereof will be omitted. In the second embodiment, similar to the first embodiment, with respect to the entire positions of the first container rack 13 and the second container rack 14 at which the container 200 can be held, a determination is made as to whether or not the container 200 is held and as to whether or not the barcode information has been successfully read out. That is, the first sample table 11 and the second sample table 12 are rotated one cycle in a predetermined direction and at a predetermined rotation speed, and then, the control section 4 makes a determination as to whether the barcode reader 3 has successfully read out the barcode information from the entire containers 200 held in the first container racks 13 and the second container racks 14 mounted on the first sample table 11 and the second sample table 12.

Next, the position (holding position) of the container 200 for which the first readout operation was not successful is identified, and the barcode information is read out again from the container 200 held at the identified position by the barcode reader 3 in accordance with a different read condition different from that of the first readout operation. The information on the read condition is preliminarily stored in the storage device 43.

In this embodiment, the barcode reader 3 employs a laser type barcode reader that scans a barcode label by irradiation of laser light. The barcode reader 3 receives reflected light and outputs a voltage signal corresponding to a reception light intensity as a two-valued voltage pulse signal. The determination as to whether the barcode information was successfully read out is determined, at a different timing, based on whether or not a value of the voltage pulse signal acquired by the control section 4 from the barcode reader 3 is greater than a predetermined threshold value. That is, the second embodiment is different from the first embodiment, in that the read condition is changed such that a read timing within one pulse for making the determination as to whether the barcode information read out from the barcode label was successfully read out is changed from the first readout operation to the second readout operation.

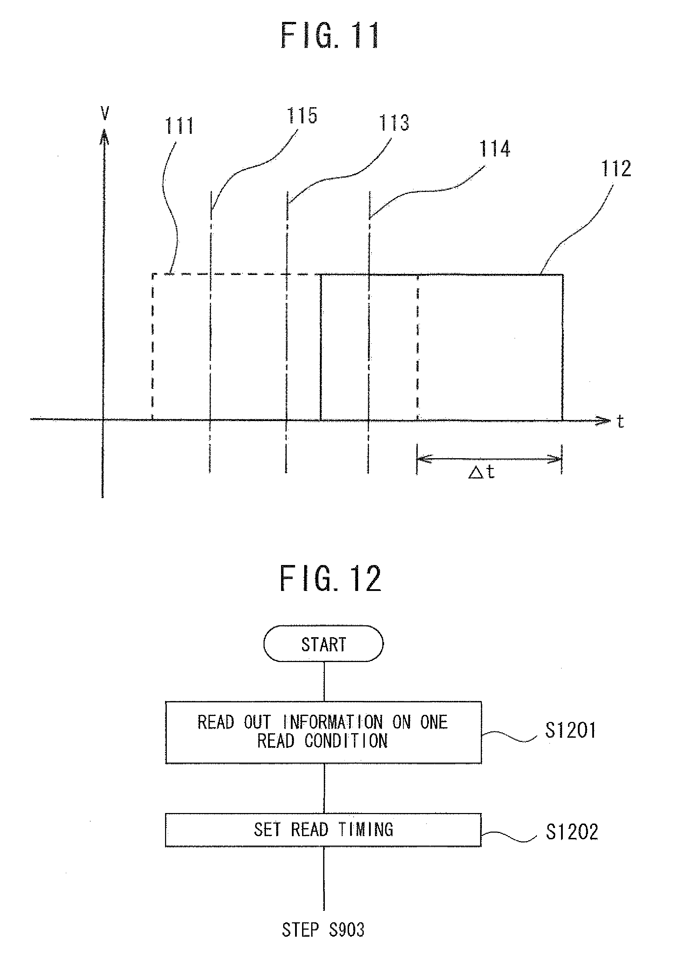

Fig. 11 is a waveform diagram for explaining a method for reading and determination in the sample analysis apparatus 10 according to the second embodiment of the present invention. In Fig. 11, the vertical axis corresponds to a magnitude (voltage value) of the voltage pulse signal, and the horizontal axis corresponds to a time.

As illustrated in Fig. 11, in the case of receiving a voltage pulse signal 111, a readout operation can be successfully when it is performed at a timing 113 corresponding to the center of the signal. However, a case may be considered in which due to damage of a barcode with dirt, attached frost, a difference in holding angle of the container 200, a received voltage pulse signal 112 is received earlier or later than the timing of the voltage pulse signal 111 to be originally received (in Fig. 11, the reception delay is denoted by Δt). Therefore, the read timing is set to include the timing 113 corresponding to the center of the voltage pulse signal 111 to be originally received and timings 114 and 115 before and after the timing 113. By doing so, even when the readout operation was not successful at the timing 113, the readout operation may be performed successfully at the timing 114 or 115.

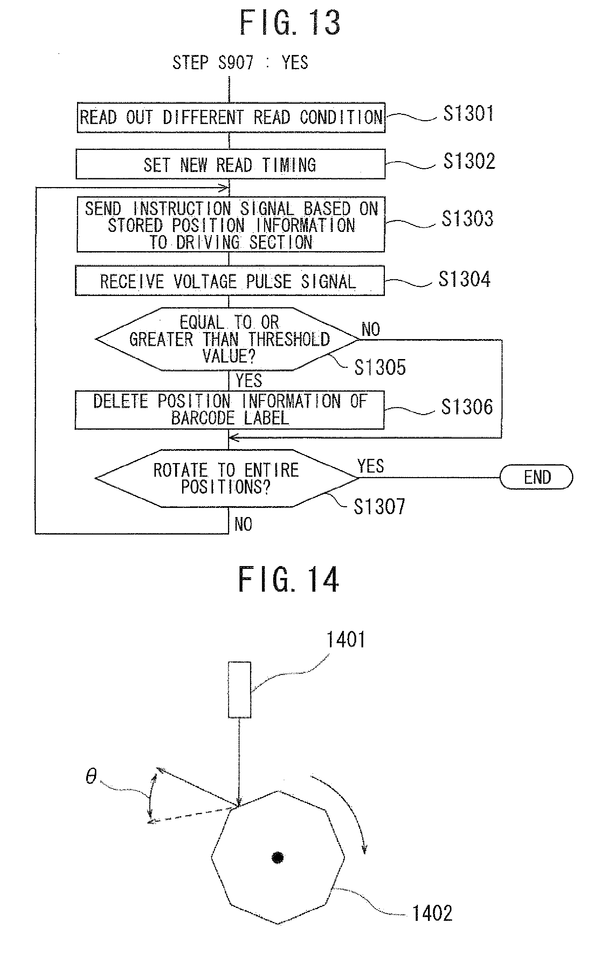

Figs. 12 and 13 are flow charts, which illustrate a processing procedure by the CPU 41 of the control section 4 of the sample analysis apparatus 10 according to the second embodiment of the present invention. In Fig. 12, information on a plurality of read conditions is stored in the storage device 43 of the control section 4. In the second embodiment, information on a plurality of read timings for the voltage pulse signal is stored in the storage device 43. The CPU 41 of the control section 4 reads out information on one read condition stored in the storage device 43 (step S1201) and sets the read condition, i.e., the read timing, based on the information on the read, one read condition (step S1202).

The processes from step S903 to step S908 are the same as those of the first embodiment. When the CPU 41 of the control section 4 has determined that the first sample table 11 and the second sample table 12 have rotated one cycle (step S907: YES), then the CPU 41 reads out a different read condition stored in the storage device 43 (step S1301) and sets a new read timing (step S1302), as illustrated in Fig. 13.

The CPU 41 sends an instruction signal to the driving section 2 to sequentially rotate the first sample table 11 and the second sample table 12 to a rotation angle stored in the storage device 43 (step S1303) and perform again the readout operation of the barcode label at the set read timing to receive the voltage pulse signal from the barcode reader 3 (step S1304). Moreover, it is preferable that the set read timing includes two timings before and after the previous read timing. This is because the readout operation is likely to be successfully performed within several timings. However, the number of timings set as the read timing is not particularly limited.

The CPU 41 makes a determination as to whether or not the barcode information has been successfully read out based on whether or not the voltage pulse signal received from the barcode reader 3 is greater than a predetermined threshold value (step S1305). When the CPU 41 has determined that it is greater than the predetermined threshold value (step S1305: YES), then the CPU 41 deletes the position information of the barcode label, of which the voltage pulse signal has been determined to be greater than the new threshold value, among the position information stored in the storage device 43 (step S1306) and makes a determination as to whether or not the rotation has been made to the entire positions stored therein (step S1307).

When the CPU 41 has determined that the rotation has been made to the entire positions (step S1307: YES), then the CPU 41 terminates the process. When the CPU 41 has determined that the rotation has not yet been made to the entire positions (step S1307: NO), then the CPU 41 returns the process to step S1303 to send an instruction signal to the driving section 2 to move to a next stored position (step S1303) and repeat the above-described processes.

When the CPU 41 has determined that it is smaller than the predetermined threshold value (step S1305: NO), then the CPU 41 skips step S1306, determining again that the readout operation was not successful.

In this manner, by changing the read timing from the first readout operation to the second readout operation, it is possible to increase a possibility of determining that the second readout operation successfully reads out the barcode label which has been determined to be not successfully read out under the read timing for the first readout operation. Moreover, by performing the second readout operation only for the barcode label which was not successfully read out by the first readout operation without changing the read position, it is possible to prevent an increase in an overall readout time as much as possible by not performing any unnecessary additional readout operation.

Moreover, in the second embodiment described above, although the readout operation of the barcode label is performed for the entire positions, and then, the readout operation is performed again for only the container 200 held at the position for which the readout operation was not successful, similar to the first embodiment, the read condition may be changed whenever it is determined that the barcode label is not successfully read out to perform again the readout operation. In such a case, it is possible to increase a possibility of successfully reading out the identification information, which was unable to be read out due to dirt or the like, in the second readout operation without changing the reading position. Therefore, it is possible to decrease the need for the user to manually identifying a sample and decrease a possibility of outputting wrong analysis data due to confusion in sample treatment or the like.

The screen image for displaying the readout result and the like on the display device 5 is the same as that of the first embodiment, and thus, a detailed description thereof will be omitted.

### (Third Embodiment)

The configuration of a sample analysis apparatus 10 according to a third embodiment of the present invention is the same as that of the first and second embodiments, and thus, the same components will be denoted by the same reference numerals and a detailed description thereof will be omitted. In the third embodiment, similar to the first and second embodiments, with respect to the entire positions of the first container rack 13 and the second container rack 14 at which the container 200 can be held, a determination is made as to whether or not the container 200 is held and as to whether or not the barcode information has been successfully read out. That is, the first sample table 11 and the second sample table 12 are rotated one cycle in a predetermined direction and at a predetermined rotation speed, and then, the control section 4 makes a determination as to whether the barcode reader 3 has successfully read out the barcode information from the entire containers 200 held in the first container racks 13 and the second container racks 14 mounted on the first sample table 11 and the second sample table 12.

Next, the position of the container 200 for which the first readout operation was not successful is identified, and the barcode information is read out again from the container 200 held at the identified position by the barcode reader 3 in accordance with a different read condition different from that of the first readout operation. The information on the read condition is preliminarily stored in the storage device 43.

In this embodiment, the barcode reader 3 employs a laser type barcode reader that scans a barcode label by irradiation of laser light. The barcode reader 3 receives reflected light and outputs a voltage signal corresponding to a reception light intensity as a two-valued voltage pulse signal. The determination as to whether the barcode information was successfully read out is determined based on whether or not a value of the voltage pulse signal acquired by the control section 4 from the barcode reader 3 is greater than a predetermined threshold value. The third embodiment is different from the first and second embodiments, in that an angle of irradiation for laser light irradiated from the barcode reader 3 for reading out the barcode information is changed.

Fig. 14 is a schematic view illustrating an overall internal configuration of the barcode reader 3 of the sample analysis apparatus 10 according to the third embodiment of the present invention. As illustrated in Fig. 14, the barcode reader 3 reflects laser light irradiated from a laser irradiator 1401 by means of an octagonal polygon mirror 1402. The octagonal polygon mirror 1402 rotates in the arrow direction at a constant speed, and a reflection angle can be changed in accordance with the length of a time interval of irradiation of the laser light.

Specifically, when the laser irradiator 1401 increases the length of the time interval of irradiation of the laser light, the reflection angle θ by the octagonal polygon mirror 1402 can be increased. On the other hand, when the laser irradiator 1401 decreases the length of the time interval of irradiation of the laser light, the reflection angle θ by the octagonal polygon mirror 1402 can be decreased. Therefore, by changing the time interval of irradiation of the laser light by the laser irradiator 1401, it is possible to change a readout angle of the barcode reader 3.

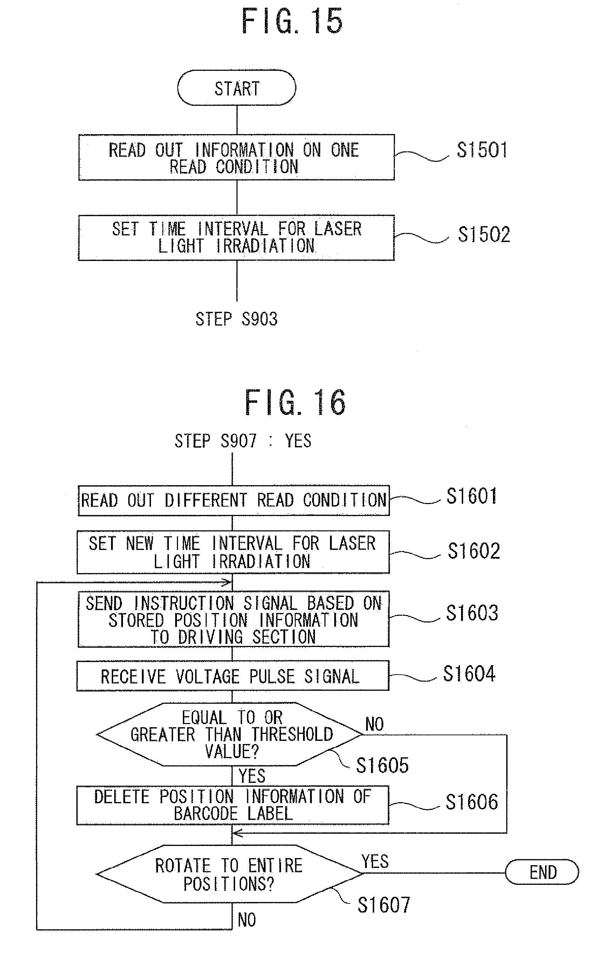

Figs. 15 and 16 are flow charts, which illustrate a processing procedure by the CPU 41 of the control section 4 of the sample analysis apparatus 10 according to the third embodiment of the present invention. In Fig. 15, information on a plurality of read conditions is stored in the storage device 43 of the control section 4. In the third embodiment, a plurality of time intervals of the laser light irradiation corresponding to the readout angle of the barcode reader 3 is stored in the storage device 43. The CPU 41 of the control section 4 reads out information on one read condition stored in the storage device 43 (step S1501) and sets the read condition, i.e., the time interval of the laser light irradiation, based on the information on the read, one read condition (step S1502).

The processes from step S903 to step S908 are the same as those of the first and second embodiments. When the CPU 41 of the control section 4 has determined that the first sample table 11 and the second sample table 12 have rotated one cycle (step S907: YES), then the CPU 41 reads out a different read condition stored in the storage device 43 (step S1601) and sets a new time interval for laser light irradiation (step S1602), as illustrated in Fig. 16.

The CPU 41 sends an instruction signal to the driving section 2 to sequentially rotate the first sample table 11 and the second sample table 12 to a rotation angle stored in the storage device 43 (step S1603) and perform again the readout operation of the barcode label to receive the voltage pulse signal from the barcode reader 3 (step S1604). Moreover, it is preferable that the set time interval is set so as to be greater than the previous time interval. This is because the readout operation is likely to be successfully performed by increasing the readout range of the barcode label.

The CPU 41 makes a determination as to whether or not the barcode information has been successfully read out based on whether or not the voltage pulse signal received from the barcode reader 3 is greater than a predetermined threshold value (step S1605). When the CPU 41 has determined that it is greater than the predetermined threshold value (step S1605: YES), then the CPU 41 deletes the position information of the barcode label, of which the voltage pulse signal has been determined to be greater than the new threshold value, among the position information stored in the storage device 43 (step S1606) and makes a determination as to whether or not the rotation has been made to the entire positions stored therein (step S1607).

When the CPU 41 has determined that the rotation has been made to the entire positions (step S1607: YES), then the CPU 41 terminates the process. When the CPU 41 has determined that the rotation has not yet been made to the entire positions (step S1607: NO), then the CPU 41 returns the process to step S1603 to send an instruction signal to the driving section 2 to move to a next stored position (step S1603) and repeat the above-described processes.

When the CPU 41 has determined that it is smaller than the predetermined threshold value (step S1605: NO), then the CPU 41 skips step S1606, determining again that the readout operation was not successful.

In this manner, by changing the readout range by the barcode reader 3 from the first readout operation to the second readout operation, it is possible to increase a possibility of determining that the second readout operation successfully reads out without changing the read position the barcode label which has been determined to be not successfully read out under the read timing for the first readout operation. Moreover, by performing the second readout operation only for the barcode label which was not successfully read out by the first readout operation without changing the read position, it is possible to prevent an increase in an overall readout time as much as possible by not performing any unnecessary additional readout operation.

Moreover, in the third embodiment described above, although the readout operation of the barcode label is performed for the entire positions, and then, the readout operation is performed again for only the container 200 held at the position for which the readout operation was not successful, similar to the first and second embodiments, the read condition may be changed whenever it is determined that the barcode label is not successfully read out to perform again the readout operation. In such a case, it is possible to increase a possibility of successfully reading out the identification information, which was unable to be read out due to dirt or the like, in the second readout operation without changing the reading position. Therefore, it is possible to decrease the need for the user to manually identifying a sample and decrease a possibility of outputting wrong analysis data due to confusion in sample treatment or the like.

The screen image for displaying the readout result and the like on the display device 5 is the same as that of the first embodiment, and thus, a detailed description thereof will be omitted.

### (Fourth Embodiment)

The configuration of a sample analysis apparatus 10 according to a fourth embodiment of the present invention is the same as that of the first to third embodiments, and thus, the same components will be denoted by the same reference numerals and a detailed description thereof will be omitted. In the fourth embodiment, similar to the first to third embodiments, with respect to the entire positions of the first container rack 13 and the second container rack 14 at which the container 200 can be held, a determination is made as to whether or not the container 200 is held and as to whether or not the barcode information has been successfully read out. That is, the first sample table 11 and the second sample table 12 are rotated one cycle in a predetermined direction and at a predetermined rotation speed, and then, the control section 4 makes a determination as to whether the barcode reader 3 has successfully read out the barcode information from the entire containers 200 held in the first container racks 13 and the second container racks 14 mounted on the first sample table 11 and the second sample table 12.

Next, the position of the container 200 for which the first readout operation was not successful is identified, and the barcode information is read out again from the container 200 held at the identified position by the barcode reader 3 in accordance with a different read condition different from that of the first readout operation. The information on the read condition is preliminarily stored in the storage device 43.

In this embodiment, the barcode reader 3 employs a laser type barcode reader that scans a barcode label by irradiation of laser light. The barcode reader 3 receives reflected light and outputs a voltage signal corresponding to a reception light intensity as a two-valued voltage pulse signal. The determination as to whether the barcode information was successfully read out is determined based on whether or not a value of the voltage pulse signal acquired by the control section 4 from the barcode reader 3 is greater than a predetermined threshold value. The fourth embodiment is different from the first to third embodiments, in that when the voltage signal is output in accordance with the reception light intensity, the voltage signal is output using a stabilization circuit for maintaining a signal output at a constant level or is amplified by a plurality of fixed amplification factors without using the stabilization circuit.

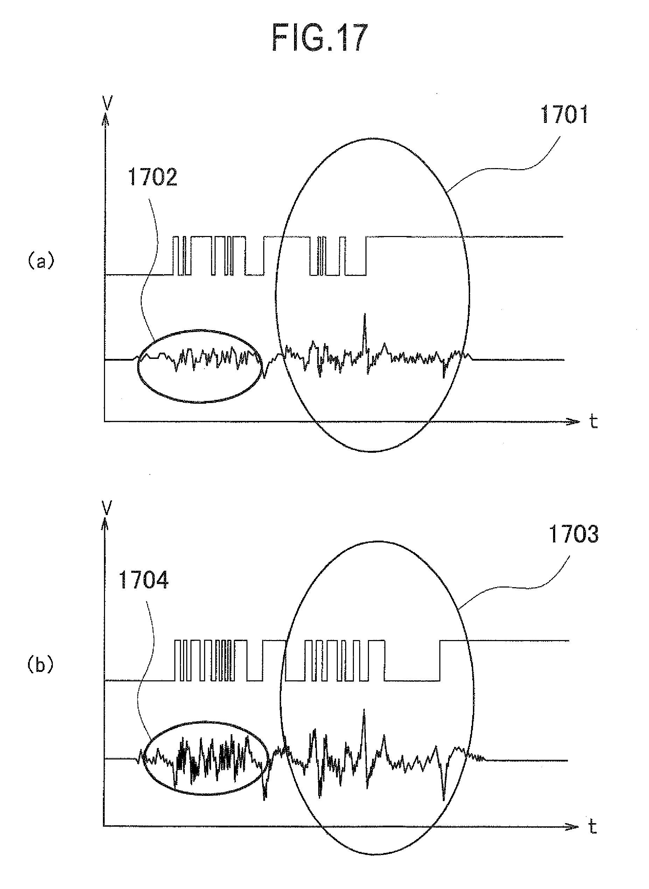

Figs. 17A and 17B are example views for comparison of a voltage signal output from the barcode reader 3 of the sample analysis apparatus 10 according to a fourth embodiment of the present invention. Fig. 17A is an example view showing a readout state of a barcode label having waterdrop attached thereto when a stabilization circuit for maintaining a signal output at a constant level is used, and Fig. 17B is an example view showing a readout state of the barcode label having waterdrop attached thereto when an optimum, fixed gain value is set without using the stabilization circuit.

As illustrated in Fig. 17A, when the waterdrop is attached to the barcode label, the reception light intensity at the barcode reader 3 increases as the light reflected from the waterdrop is also included, and thus, the readout signal of the barcode label may be estimated to be relatively low when it is corrected by the stabilization circuit. As a result, the barcode information is not successfully read out. To the contrary, as illustrated in Fig. 17B, when an optimum fixed gain value is used without using the stabilization circuit, the barcode information is not attenuated by the stabilization circuit, and thus, the possibility of successfully reading out the barcode information increases.

That is, in Fig. 17A, a first-half signal waveform 1702 read out from the barcode label is attenuated by being influenced by a second-half signal waveform 1701 and is thus unable to be successfully read out. To the contrary, in Fig. 17B, it is possible to successfully read out a first-half signal waveform 1704 of the barcode label without being influenced by a second-half signal waveform 1703.

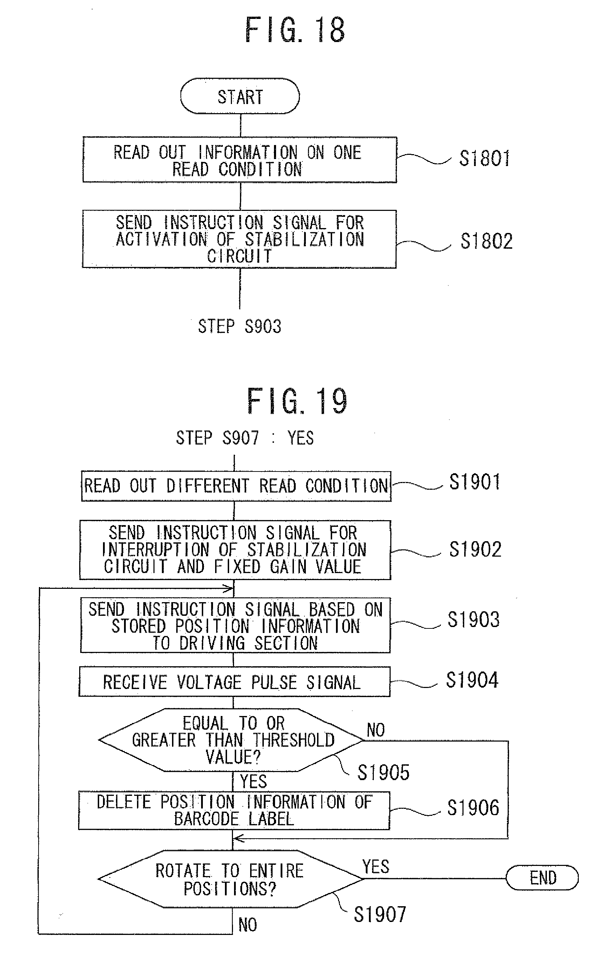

Figs. 18 and 19 are flow charts, which illustrate a processing procedure by the CPU 41 of the control section 4 of the sample analysis apparatus 10 according to the fourth embodiment of the present invention. In Fig. 18, information on a plurality of read conditions is stored in the storage device 43 of the control section 4. In the fourth embodiment, information as to whether or not a stabilization circuit is activated during readout of the barcode reader 3 and information on a fixed gain value or the like when it is not activated is stored in the storage device 43. The CPU 41 of the control section 4 reads out information on one read condition stored in the storage device 43 (step S1801) and sends the read condition, i.e., an instruction signal for activation of the stabilization circuit, based on the information on the read, one read condition to the barcode reader 3 (step S1802).

The processes from step S903 to step S908 are the same as those of the first to third embodiments. When the CPU 41 of the control section 4 has determined that the first sample table 11 and the second sample table 12 have rotated one cycle (step S907: YES), then the CPU 41 reads out a different read condition stored in the storage device 43 (step S1901) and sends an instruction signal for interruption of a stabilization circuit and a fixed gain value to the barcode reader 3 (step S1902), as illustrated in Fig. 19.

The CPU 41 sends an instruction signal to the driving section 2 to sequentially rotate the first sample table 11 and the second sample table 12 to a rotation angle stored in the storage device 43 (step S1903) and perform again the readout operation of the barcode label to receive the voltage pulse signal from the barcode reader 3 (step S1904).

The CPU 41 makes a determination as to whether or not the barcode information has been successfully read out based on whether or not the voltage pulse signal received from the barcode reader 3 is greater than a predetermined threshold value (step S1905). When the CPU 41 has determined that it is greater than the predetermined threshold value (step S1905: YES), then the CPU 41 deletes the position information of the barcode label, of which the voltage pulse signal has been determined to be greater than the new threshold value, among the position information stored in the storage device 43 (step S1906) and makes a determination as to whether or not the rotation has been made to the entire positions stored therein (step S1907).

When the CPU 41 has determined that the rotation has been made to the entire positions (step S1907: YES), then the CPU 41 terminates the process. When the CPU 41 has determined that the rotation has not yet been made to the entire positions (step S1907: NO), then the CPU 41 returns the process to step S1903 to send an instruction signal to the driving section 2 to move to a next stored position (step S1903) and repeat the above-described processes.

When the CPU 41 has determined that it is smaller than the predetermined threshold value (step S1905: NO), then the CPU 41 skips step S1906, determining again that the readout operation was not successful.

In this manner, by changing the readout method by the barcode reader 3 from the first readout operation to the second readout operation, it is possible to increase a possibility of determining that the second readout operation successfully reads out the barcode label without changing the read position which has been determined to be not successfully read out under the read timing for the first readout operation. Moreover, by performing the second readout operation only for the barcode label which was not successfully read out by the first readout operation without changing the read position, it is possible to prevent an increase in an overall readout time as much as possible by not performing any unnecessary additional readout operation.

Moreover, it is preferable to set a plurality of fixed gain values used in the fourth embodiment described above. Since the reception light intensity changes depending on a distance from the barcode reader 3, by setting a plurality of gain values such as a gain value for near distance and a gain value for far distance, it is possible to determine whether or not the readout operation was successfully performed for the entire barcode labels. For example, a determination as to whether or not the readout operation was successful is first made based on the highest fixed gain value, and when the first readout operation was not successful, the determination is repeated while changing the gain value used in the determination to the next highest fixed gain value. By doing so, it is possible to determine whether or not the barcode information was successfully read out regardless of the reception light intensity.

Moreover, in the fourth embodiment described above, although the readout operation of the barcode label is performed for the entire positions, and then, the readout operation is performed again for only the container 200 held at the position for which the readout operation was not successful, similar to the first to third embodiments, the read condition may be changed whenever it is determined that the barcode label is not successfully read out to perform again the readout operation. In such a case, it is possible to increase a possibility of successfully reading out the identification information, which was unable to be read out due to dirt or the like, in the second readout operation without changing the reading position. Therefore, it is possible to decrease the need for the user to manually identifying a sample and decrease a possibility of outputting wrong analysis data due to confusion in sample treatment or the like.

The screen image for displaying the readout result and the like on the display device 5 is the same as that of the first embodiment, and thus, a detailed description thereof will be omitted.

### (Fifth Embodiment)

The configuration of a sample analysis apparatus 10 according to a fifth embodiment of the present invention is the same as that of the first to fourth embodiments, and thus, the same components will be denoted by the same reference numerals and a detailed description thereof will be omitted. In the fifth embodiment, similar to the first to fourth embodiments, with respect to the entire positions of the first container rack 13 and the second container rack 14 at which the container 200 can be held, a determination is made as to whether or not the container 200 is held and as to whether or not the barcode information has been successfully read out. That is, the first sample table 11 and the second sample table 12 are rotated one cycle in a predetermined direction and at a predetermined rotation speed, and then, the control section 4 makes a determination as to whether the barcode reader 3 has successfully read out the barcode information from the entire containers 200 held in the first container racks 13 and the second container racks 14 mounted on the first sample table 11 and the second sample table 12.

Next, the position of the container 200 for which the first readout operation was not successful is identified, and the barcode information is read out again from the container 200 held at the identified position by the barcode reader 3 in accordance with a different read condition different from that of the first readout operation.

The fifth embodiment is different from the first to fourth embodiment, in that the rotation direction and the rotation speed of the first sample table 11 and the second sample table 12 which are rotated to read out the barcode information are changed. That is, as the read condition, the rotation direction and the rotation speed of the first sample table 11 and the second sample table 12 are stored in the storage device 43.

For example, in the read condition for the first readout operation, the first sample table 11 and the second sample table 12 have a constant rotation direction and a constant rotation speed, while in the read condition for the second readout operation, the rotation direction and the rotation speed of the first sample table 11 and the second sample table 12 are changed every readout operation so that the barcode label is read out whenever the first sample table 11 and the second sample table 12 are stopped. Moreover, in the read condition for the second readout operation, the barcode label may be read out while changing the rotation speed of the first sample table 11 and the second sample table 12 so as to be smaller than that of the read condition for the first readout operation. In either case, since it is possible to receive the reflected laser light for a longer period of time, it is possible to increase a possibility of successfully performing the readout operation more than the first readout operation.

Moreover, the read condition may be set such that in the read condition for the first readout operation, the first sample table 11 and the second sample table 12 have a constant rotation direction and a constant rotation speed while in the read condition for the second readout operation, the rotation direction of the first sample table 11 and the second sample table 12 may be reversed. This is because when the received voltage pulse signal experiences a time progress or a time delay, the signal can only be successfully read out when it is read in a reverse direction.

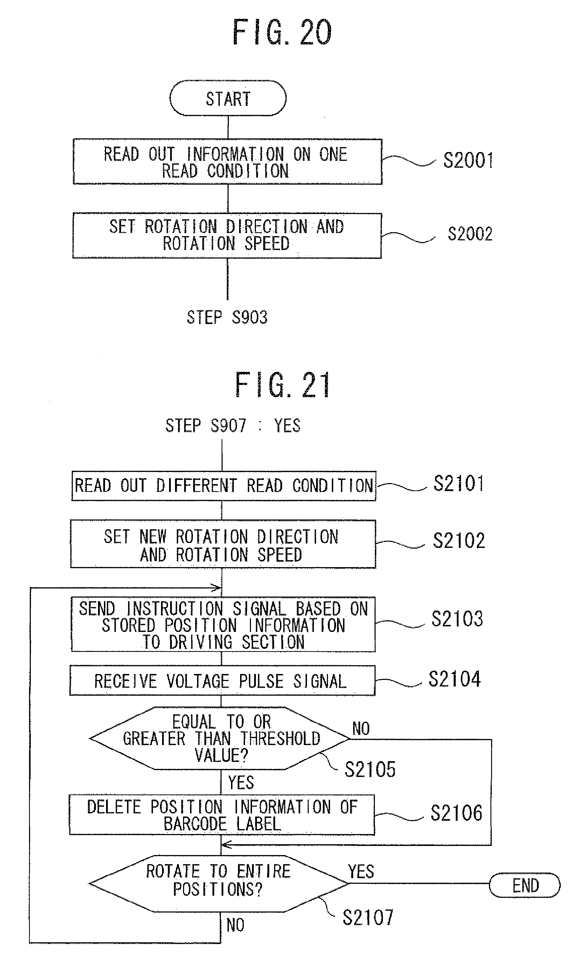

Figs. 20 and 21 are flow charts, which illustrate a processing procedure by the CPU 41 of the control section 4 of the sample analysis apparatus 10 according to the fifth embodiment of the present invention. In Fig. 20, information on a plurality of read conditions is stored in the storage device 43 of the control section 4. In the fifth embodiment, a plurality of rotation directions and rotation speeds of the first sample table 11 and the second sample table 12 are stored in the storage device 43. The CPU 41 of the control section 4 reads out information on one read condition stored in the storage device 43 (step S2001) and sets the read condition, i.e., the rotation direction and the rotation speed, based on the information on the read, one read condition (step S2002).

The processes from step S903 to step S908 are the same as those of the first to fourth embodiments. When the CPU 41 of the control section 4 has determined that the first sample table and the second sample table 12 have rotated one cycle (step S907: YES), then the CPU 41 reads out a different read condition stored in the storage device 43 (step S2101) and sets a new rotation direction and a new rotation speed (step S2102), as illustrated in Fig. 21.

The CPU 41 sends an instruction signal to the driving section 2 to sequentially rotate the first sample table 11 and the second sample table 12 in the set rotation direction and at the set rotation speed to a rotation angle stored in the storage device 43 (step S2103) and perform again the readout operation of the barcode label to receive the voltage pulse signal from the barcode reader 3 (step S2104).

The CPU 41 makes a determination as to whether or not the barcode information has been successfully read out based on whether or not the voltage pulse signal received from the barcode reader 3 is greater than a predetermined threshold value (step S2105). When the CPU 41 has determined that it is greater than the predetermined threshold value (step S2105: YES), then the CPU 41 deletes the position information of the barcode label, of which the voltage pulse signal has been determined to be greater than the new threshold value, among the position information stored in the storage device 43 (step S2106) and makes a determination as to whether or not the rotation has been made to the entire positions stored therein (step S2107).

When the CPU 41 has determined that the rotation has been made to the entire positions (step S2107: YES), then the CPU 41 terminates the process. When the CPU 41 has determined that the rotation has not yet been made to the entire positions (step S2107: NO), then the CPU 41 returns the process to step S2103 to send an instruction signal to the driving section 2 to move to a next stored position (step S2103) and repeat the above-described processes.

When the CPU 41 has determined that it is smaller than the predetermined threshold value (step S2105: NO), then the CPU 41 skips step S2106, determining again that the readout operation was not successful.

In this manner, by changing the rotation direction and the rotation speed of the first sample table 11 and the second sample table 12 from the first readout operation to the second readout operation, it is possible to increase a possibility of determining that the second readout operation successfully reads out the barcode label which has been determined to be not successfully read out under the read timing for the first readout operation. Moreover, by performing the second readout operation only for the barcode label which was not successfully read out by the first readout operation without changing the read position, it is possible to prevent an increase in an overall readout time as much as possible by not performing any unnecessary additional readout operation.

Although the barcode reader 3 is fixed in the fifth embodiment described above, the barcode reader 3 may be movable. In this case, the above-described advantage can be obtained by storing the above-described read condition about a relative speed between the barcode reader 3 and the first sample table 11 and the second sample table 12 in the storage device 43.

Moreover, in the fifth embodiment described above, although the readout operation of the barcode label is performed for the entire positions, and then, the readout operation is performed again for only the container 200 held at the position for which the readout operation was not successful, similar to the first to fourth embodiments, the read condition may be changed whenever it is determined that the barcode label is not successfully read out to perform again the readout operation. In such a case, it is possible to increase a possibility of successfully reading out the identification information, which was unable to be read out due to dirt or the like, in the second readout operation without changing the reading position. Therefore, it is possible to decrease the need for the user to manually identifying a sample and decrease a possibility of outputting wrong analysis data due to confusion in sample treatment or the like.

The screen image for displaying the readout result and the like on the display device 5 is the same as that of the first embodiment, and thus, a detailed description thereof will be omitted.

Moreover, the first to fifth embodiments described above may be modified within the range without departing from the spirit of the present invention. Specifically, the configuration of the holding section 1 holding the sample container, the reagent container, and the like is not limited to a configuration where it is rotated by the driving section 2, but it may be linearly moved as long as it can be relatively moved to a position where the barcode reader 3 can perform a readout operation. Moreover, the identification information is not limited to the barcode information but may be a three-dimensional code such as a QR code. It goes without saying that the identification information may be read out by wireless communication using an IC chip. Moreover, any one of the first to fifth embodiments described above may be employed and a combination thereof may be employed. Furthermore, although the same barcode reader 3 is used for the first readout operation and the second readout operation in the first to fifth embodiments described above, the barcode reader used for the first readout operation and the second readout operation may be changed.

According to another embodiment a sample analysis method for analyzing a measurement sample prepared by mixing a sample and a reagent comprises the steps of: (a) reading out identification information assigned for identification of at least one of a sample container, a reagent container, and a holding section for holding the sample container or the reagent container, from a predetermined position in accordance with a predetermined read condition; (b) determining whether or not the identification information has been successfully read out; and (c) changing the predetermined read condition to a stored, different read condition when a determination result in the step (b) shows that the readout operation was not successful.

In this embodiment the step (b) may include making the determination as to whether or not the readout operation was successful based on whether or not a signal value of the identification information read out in the step (a) is greater than a predetermined threshold value, and the different read condition may have the predetermined threshold value set to be different from that of the predetermined read condition.

Moreover, the step (b) may include making makes the determination as to whether or not the readout operation was successful based on whether or not the value of a signal generated, at a predetermined timing, based on the identification information read out in the step (a) is greater than a predetermined threshold value, and wherein the different read condition may have the predetermined timing, the number of timings, and an readout order, which are set to be different from those of the predetermined read condition. Moreover, the different read condition may have the identification information and a relative speed, which are set to be different from those of the predetermined read condition, the relative speed being caused by a movement of at least one of means for performing the step (a) during readout of the identification information.

Here, the relative speed for the predetermined read condition may be greater than 0 while the relative speed for the different read condition is 0.

And, the relative speed for the predetermined read condition may be greater than 0 while the relative speed for the different read condition is smaller than the relative speed for the predetermined read condition.

According to another embodiment, a computer program product, comprises: a computer readable medium; and instructions, on the computer readable medium, adapted to enable a general purpose computer to perform operations, comprising: (a) reading out identification information assigned for identification of at least one of a sample container, a reagent container, and a holding section for holding the sample container or the reagent container, from a predetermined position in accordance with a predetermined read condition; (b) determining whether or not the identification information has been successfully read out; and (c) changing the predetermined read condition to a stored, different read condition when a determination result in the step (b) shows that the readout operation was not successful.

## Claims

1. A sample analysis apparatus for analyzing a measurement sample prepared by mixing a sample and a reagent comprising:
a condition memory for storing information regarding a plurality of read conditions;
an ID acquirer for reading out identification information at a predetermined position in accordance with a predetermined read condition, the identification information being assigned for identification of at least one of a sample container, a reagent container, and a holding section for holding the sample container or the reagent container;
an ID acquisition checker for determining whether or not the ID acquirer has successfully read out the identification information; and
a read condition changer for changing the predetermined read condition to a different read condition different from the predetermined read condition stored in the condition memory when the ID acquisition checker has determined that the readout operation was not successful.

2. The sample analysis apparatus according to Claim 1,
wherein the ID acquirer reads out again the identification information, for which the ID acquisition checker has determined that the readout operation was not successful, at the predetermined position in accordance with the different read condition, and
wherein the ID acquisition checker determines again whether or not the identification information has been successfully read out.

3. The sample analysis apparatus according to Claim 1 or 2, further comprising a position identifier for identifying a position of the identification information for which the ID acquisition checker has determined that the readout operation was not successful,
wherein the ID acquirer reads out again the identification information present at the position identified by the position identifier in accordance with the different read condition.

4. The sample analysis apparatus according to any one of claims 1 to 3, wherein the identification information is contained in barcode information, and the ID identifier is a barcode reader.

5. The sample analysis apparatus according to Claim 4,
wherein the different read condition has a scan width which is set to be different from that of the predetermined read condition, the scan width being used for the barcode reader to read out the barcode information.

6. The sample analysis apparatus according to any one of claims 1 to 5,
wherein the ID acquisition checker makes the determination based on whether or not a signal value of the identification information read out by the ID acquirer is greater than a predetermined threshold value, and
wherein the read condition has the predetermined threshold value which is set to be different from that of the predetermined read condition.

7. The sample analysis apparatus according to any one of claims 1 to 6,
wherein the ID acquisition checker makes the determination based on whether or not a value of a signal at a predetermined timing is greater than the predetermined threshold value, the value of a signal being generated based on the identification information read out by the ID acquirer, and
wherein the different read condition has a predetermined timing, a number of timings, and an readout order, which are set to be different from those of the predetermined read condition.

8. The sample analysis apparatus according to any one of claims 1 to 7, wherein the different read condition has a relative speed which is set to be different from that of the predetermined read condition, the relative speed being caused by a movement of at least one of the ID acquirers and the identification information during read out.

9. The sample analysis apparatus according to claim 8,
wherein the relative speed for the predetermined read condition is greater than 0 while the relative speed for the different read condition is 0.

10. The sample analysis apparatus according to claim 8,
wherein the relative speed for the predetermined read condition is greater than 0 while the relative speed for the different read condition is smaller than the relative speed for the predetermined read condition.

11. The sample analysis apparatus according to claim 8,
wherein the relative speed for the predetermined read condition is speed in a predetermined direction while the relative speed for the different read condition is speed in a direction opposite to the predetermined direction.

12. A sample analysis method for analyzing a measurement sample prepared by mixing a sample and a reagent, comprising:
(a) reading out identification information assigned for identification of at least one of a sample container, a reagent container, and a holding section for holding the sample container or the reagent container at a predetermined position in accordance with a predetermined read condition;
(b) determining whether or not the identification information has been successfully read out; and
(c) changing the predetermined read condition to a different read condition when a determination result in the step (b) shows that the readout operation was not successful.

13. The sample analysis method according to claim 12, further comprising:
(d) reading out again the identification information for which the determination result in the step (b) shows that the readout operation was not successful at the predetermined position in accordance with the different read condition; and
(e) determining again whether or not the identification information read out in the step (d) has been successfully read out.

14. The sample analysis method according to claim 12 or 13, further comprising:
(f) identifying a position of the identification information for which the determination result in the step (b) shows that the readout operation was not successful; and
(g) reading out again the identification information present at the position identified in the step (f) in accordance with the different read condition.

15. A computer program product, comprising:
a computer readable medium; and
instructions, on the computer readable medium, adapted to enable a general purpose computer to perform operations, comprising:
(a) reading out identification information assigned for identification of at least one of a sample container, a reagent container, and a holding section for holding the sample container or the reagent container at a predetermined position in accordance with a predetermined read condition;
(b) determining whether or not the identification information has been successfully read out; and
(c) changing the predetermined read condition to a different read condition when a determination result in the step (b) shows that the readout operation was not successful.
